# EUROPÄISCHE PATENTSCHRIFT

(11) **EP 2 102 842 B1**
(45) Veröffentlichungstag und Bekanntmachung des Hinweises auf die Patenterteilung: **20.02.2013**
(21) Anmeldenummer: 07856197.4
(22) Anmeldetag: 20.11.2007
(51) Int. Cl.: B60K 37/06, G09F 13/04

(54) **VERFAHREN ZUR HERSTELLUNG EINES BELEUCHTBAREN KÖRPERS**
METHOD FOR PRODUCTION OF AN ILLUMINABLE BODY
PROCÉDÉ DE PRODUCTION D'UN CORPS QUI PEUT ÊTRE ÉCLAIRÉ

(30) Priorität: 27.11.2006 DE 102006056272
(43) Veröffentlichungstag der Anmeldung: 23.09.2009
(73) Patentinhaber: Bernd Kussmaul Gmbh, 71384 Weinstadt-Grossheppach (DE)
(72) Erfinder: LAYER, Konrad, 71364 Winnenden (DE)
(74) Vertreter: Wimmer, Stephan
(86) Internationale Anmeldenummer: PCT/EP2007/010023
(87) Internationale Veröffentlichungsnummer: WO 2008/064801

(56) Entgegenhaltungen:
- EP-A1- 1 777 105
- WO-A1-2004/102064
- DE-A1- 10 338 885
- DE-A1- 19 904 915
- DE-A1- 19 918 370
- DE-A1-102004 010 974
- DE-U1- 8 604 363
- GB-A- 2 366 900
- US-A- 5 572 812
- US-A1- 2004 128 882

## Beschreibung

Die vorliegende Erfindung betrifft ein Verfahren zur Herstellung eines beleuchtbaren Körpers.

Die vorliegende Erfindung bezieht sich insbesondere auf Verfahren zur Herstellung der Körper, die hintergrundbeleuchtet werden können, bspw. beleuchtete Bedienelemente in Kraftfahrzeugen, wie sie in der DE 102 60 831 B3 und der DE 10 2004 009 208 A1 beschrieben sind, oder Dekorteile, wie sie in der DE 20 2006 002 711 U1 beschrieben sind.

Derartige Körper werden bspw. aus transparentem Kunststoff hergestellt. Die Vorderseite wird mit einer lichtundurchlässigen Beschichtung versehen, und anschließend wird das gewünschte Symbol bzw. Dekor durch gezieltes Entfernen der Beschichtung auf die Vorderseite aufgebracht. Wenn der Körper aus einem anderen Werkstoff als Kunststoff bestehen soll, muss er aus mehreren Einzelteilen aufgebaut sein (DE 102 60 831 B3, DE 10 2004 009 208 A1). Eine weitere Schwierigkeit besteht darin, dass mit den bisher bekannten Herstellungsverfahren nicht alle Symbole bzw. Dekore problemlos aufgebracht werden können, bspw. runde Symbole bzw. Dekore.

Vor allem im Automobilbereich besteht jedoch eine Nachfrage nach Innenausstattungen mit besonders hochwertiger Anmutung, wobei derartige Körper als Bedienteile aus Metall, insbesondere Aluminium, ausgeführt sein sollen. Im Übrigen besteht generell der Wunsch, den Grundwerkstoff derartiger Körper frei wählen und beliebige Symbole bzw. Dekore problemlos aufbringen zu können.

In DE 10 2004 010 974 A1 sind eine Beleuchtungskomponente für ein Fahrzeug und ein Verfahren zur Herstellung einer Beleuchtungskomponente beschrieben. Eine Dekormaterialschicht weist einen ersten, transluzenten oder transparenten Bereich und einen zweiten, nicht transluzenten Bereich aus einem Dekormaterial auf. Zur Herstellung wird im ersten Bereich durch Stanzen, Laserschneiden oder Wasserstrahlschneiden eine Ausnehmung im Dekormaterial erzeugt, die durch Einlegen, Einfüllen, Ausgießen oder Ausspritzen eines "Beleuchtungsmaterials" wieder geschlossen wird. Über dem ersten Bereich und dem zweiten Bereich kann eine transluzente oder transparente Kaschierschicht angeordnet sein.

In DE 199 18 370 A1 ist eine LED-Weißlichtquelle mit Linse beschrieben. Eine Ausnehmung in einem durch Spritzguss geformten Grundkörper, in der eine LED angeordnet ist, wird mit einem transparenten Harzmaterial, das einen Wellenlängenkonverter enthält, und mit einer vorgeformten Linse 4 aufgefüllt.

In DE 199 04 915 A1 ist ein feuchtigkeitsdichtes Lichtband beschrieben. Eine "profilförmige Abdeckung" weist einen U-förmigen Querschnitt auf, der eine von der Sichtfläche abgewandte Vertiefung umschließt, in der eine Leitung mit Lichtquellen angeordnet ist. Ein Zwischenraum zwischen der profilförmigen Abdeckung und der Leitung ist weitgehend mit Gussmaterial aufgefüllt.

In DE 103 38 885 A1 ist eine Beleuchtungseinrichtung für einen Nassbereich beschrieben. Nahe einem äußeren Umfang eines näherungsweise rotationssymmetrischen Gehäuses sind Längsbohrungen vorgesehen, in denen Leuchtdioden angeordnet sind, und die mit Epoxidharz ausgegossen sind.

In DE 86 04 363 U1 ist ein Schild aus einer Steinplatte mit Ausnehmungen, in denen Zeichen aus einem transparenten Stoff angeordnet sind, beschrieben. Die Steinplatte kann von hinten beleuchtet sein. Wenn der Stein nicht transparent ist, können Lichtkanäle vorgesehen sein oder der gesamte Schriftzug durchbrochen sein, wenn die Zeichen dies erlauben.

In WO 2004/102064 A1 ist eine flächige Lichtquelle für Straßen oder für Rollbahnen von Flugfeldern beschrieben. Ein druckfestes Basiselement enthält Durchgangslöcher, an deren unteren Enden lichterzeugende Elemente angeordnet sind.

In GB 2 366 900 A1 ist ein beleuchtetes Anzeigeelement beschrieben. In einem Aluminiumblock sind Durchgangslöcher angeordnet, in denen Leuchtdioden angeordnet, und die mit Fenstern verschlossen sind.

In US 2004/0128882 A1 ist ein Anzeigeschild beschrieben. In einem Trägerelement sind Öffnungen durch Stanzen, Schneiden oder auf andere Weise erzeugt, die mit einem transparenten PU-Harz aufgefüllt sind. Während des Auffüllens mit dem transparenten PU-Harz kann ein Schutzfilm vorgesehen sein.

In US 5,572,812 ist ein Nummernschild mit leuchtenden Zeichen beschrieben. Aus einer Frontplatte werden Buchstabenbereiche ausgestanzt, in die entsprechende und aus transparentem synthetischem Harz gegossene Buchstaben eingesetzt werden.

In EP 1 777 105 A1 ist ein Trittbrett für ein Fahrzeug beschrieben. Das Trittbrett umfasst einen Träger mit Öffnungen, in die Beleuchtungseinrichtungen, Abdeckungen und ein Schutzfilm oder eine Schutzabdeckung eingesetzt sind.

Die Aufgabe der vorliegenden Erfindung besteht somit darin, ein Verfahren zur Herstellung eines beleuchtbaren Körpers bereitzustellen, welches eine freie Werkstoffwahl und das Aufbringen von beliebigen Symbolen bzw. Dekoren erlaubt, ohne den Herstellungsaufwand unzumutbar zu erhöhen. Eine weitere Aufgabe der vorliegenden Erfindung ist es, einen beleuchtbaren Körper zur Verfügung zu stellen, der aus einem beliebig wählbaren Grundwerkstoff besteht und mit beliebigen Symbolen bzw. Dekoren versehen werden kann.

Die Lösung der Aufgabe besteht in einem Verfahren mit den Merkmalen des Patentanspruchs 1. Erfindungsgemäß sind die folgenden Verfahrensschritte vorgesehen:
a) Auswählen eines Korpus mit einer Vorderseite und einer Rückseite oder Auswählen einer Urform für einen Korpus mit einer Vorderseite und einer Rückseite;
b) Einbringen mindestens einer Vertiefung in die Vorderseite des Korpus oder Einbringen mindestens einer Vertiefung beim Urformen des Korpus;
c) Ausfüllen der mindestens einen Vertiefung mit einer zumindest teilweise transparenten Füllmasse;
d) Freilegen der zumindest teilweise transparenten Füllmasse ausgehend von der Rückseite des Korpus.

Der beleuchtbare Körper zeichnet sich durch einen eine Vorderseite und eine Rückseite aufweisenden Korpus aus, welcher mindestens eine von der Vorderseite bis zur Ausnehmung durchgehende Öffnung aufweist, die mit einer zumindest teilweise transparenten Füllmasse gefüllt ist.

Das erfindungsgemäße Verfahren ist durch besonders einfache Verfahrensschritte gekennzeichnet, die einen schnellen, kostengünstigen und für die Serienfertigung geeigneten Herstellungsprozess ermöglichen. Die mindestens eine Vertiefung kann durch nachträgliche Bearbeitung eines bereits vorhandenen Korpus in dessen Vorderseite eingebracht werden. Der Korpus kann aber auch aus einer Urform hergestellt werden, wobei die Vertiefung durch entsprechende Ausgestaltung der Urform mit dem Herstellungsprozess des Korpus in dessen Vorderseite eingebracht wird. Unter dem Herstellen aus einer Urform bzw. dem Urformen des Korpus wird hier die Schaffung des Korpus aus einem formlosen Werkstoff verstanden, wobei der Zusammenhalt des Werkstoffs beim Ablauf des Herstellungsverfahrens entsteht. Beispiele hierfür sind Gießen eines flüssigen Werkstoffs, Extrudieren eines plastischen Werkstoffs oder Sintern eines körnigen oder pulvrigen Werkstoffs.

Die in die Vorderseite des Korpus eingebrachte mindestens eine Vertiefung stellt dabei die gewünschte Dekoration bzw. das gewünschte Symbol dar, wobei alle beliebigen Symbole und Dekore in Form von Vertiefungen problemlos dargestellt werden können, insbesondere Kreise oder Buchstaben wie "o" oder "q". Mit geringem Aufwand können beleuchtbare Körper mit einem Korpus aus jedem beliebigen Werkstoff hergestellt werden. Der beleuchtbare Körper ist daher für alle funktionellen und dekorativen Anwendungen geeignet und kann auch problemlos an individuelle technische Vorschriften (bspw. die Leitlinien der Kfz-Industrie) angepasst werden. Mit dem beleuchtbaren Körper können auch hohe Anforderungen an Qualität und Design erfüllt werden. Dies gilt nicht nur für hochwertige dekorative Wohnungsausstattungen, sondern bspw. auch für die Innenausstattung von Fahrzeugen, insbesondere Kraftfahrzeugen der Oberklasse.

Das erfindungsgemäße Verfahren erlaubt es ferner, die Vorderseite des Korpus unabhängig vom Design des beleuchtbaren Körpers und unabhängig von der Art der jeweiligen Symbole bzw. Dekore beliebig zu bearbeiten. Insbesondere kann die Vorderseite mit einer völlig ebenen Oberfläche versehen werden, so dass die Gefahr von Verschmutzungen und Beschädigungen erheblich reduziert wird. Ein Korpus aus Metall kann sogar elektrochemisch bearbeitet, bspw. galvanisch beschichtet werden, wobei die Oberfläche des Füllmaterials nicht beeinflusst wird, sofern das Füllmaterial nicht elektrisch leitend ist. Das Füllmaterial kann farblos oder farbig sein, so dass verschiedene Dekorelemente bzw. Symbole verschiedenfarbig leuchten und dekorative Farbeffekte erzielt sowie verschiedene Funktionen angezeigt werden können.

Der beleuchtbare Körper ist ferner für alle denkbaren Leuchtmittel wie bspw. LEDs, Dioden, Glühbirnen, Lichtleiter etc. geeignet Die Leuchtmittel können auch mehrfarbig ausgestaltet sein, so dass verschiedene Schaltfunktionen angezeigt werden bzw. bei Dekorteilen wiederum vielfältige Farbeffekte erzielt werden können. Der Körper kann aber auch mit einer externen Lichtquelle oder einem weiteren beleuchteten Bauteil kombiniert werden.

Vorteilhafte Weiterbildungen ergeben sich aus den Unteransprüchen.

Der Korpus des beleuchtbaren Körpers kann aus einem beliebigen Werkstoff, insbesondere Metall, Kunststoff, Keramik, Stein oder Holz bestehen. Je nach Wahl des Werkstoffs kann die mindestens eine Vertiefung durch ein beliebiges geeignetes Arbeitsverfahren, wie bspw. Schneiden, Ätzen, Bohren, Fräsen, Erodieren, Prägen oder Lasern in den Korpus eingebracht werden. Die mindestens eine Vertiefung kann auch beim Urformen des Korpus in dessen Vorderseite eingebracht werden.

Die mindestens eine Vertiefung kann bspw. durch Tauchen, Giessen oder Spritzen mit der zumindest teilweise transparenten Füllmasse ausgefüllt werden. Als Füllmasse eignen sich alle zumindest teilweise transparenten, farblosen oder farbigen Werkstoffe, die in einem hierfür geeigneten Zustand (bspw. flüssig, zähflüssig, thixotrop, plastisch, spritzgussfähig, etc.) verarbeitet werden können und sich nach dem Ausfüllen der mindestens einen Vertiefung dauerhaft verfestigen. Besonders geeignet sind bspw. Füllmassen, die Kunststoffe aller Art oder Gläser enthalten oder daraus bestehen.

Nach dem Ausfüllen der mindestens einen Vertiefung mit dem Füllmaterial wird das Füllmaterial von der Rückseite des Korpus her freigelegt, so dass eine von der Vorderseite bis zur Rückseite durchgehende, mit der Füllmasse gefüllte Öffnung entsteht Dies kann bspw. dadurch geschehen, dass der Korpus in Höhe der Füllmasse durchtrennt wird oder dass in die Rückseite des Korpus mindestens eine Ausnehmung eingebracht wird. Dies kann durch ein für den gewählten Korpuswerkstoff geeignetes Arbeitsverfahren, wie Schneiden, Fräsen, Erodieren, Schleifen, Drehen oder Lasern geschehen.

Die mindestens eine Ausnehmung kann mit mindestens einem Leuchtmittel versehen werden. Das Leuchtmittel kann auch erst bei der Montage des beleuchtbaren Körpers den mit dem Füllmaterial versehenen durchgehenden Öffnungen zugeordnet werden. Bspw. kann der Körper - mit oder ohne Ausnehmung - mit einer externen Lichtquelle verbunden oder auf ein leuchtendes oder beleuchtetes Bauteil aufgebracht werden.

Die mindestens eine Ausnehmung kann mit einer stabilisierenden Füllung versehen werden, um die Festigkeit des beleuchtbaren Körpers zu erhöhen, insbesondere wenn auf seine Vorderseite Druck ausgeübt wird, wie bspw. bei einem Bedienelement in einem Kraftfahrzeug. Die stabilisierende Füllung kann gleichzeitig zum Fixieren von Leuchtmitteln in der mindestens einen Ausnehmung dienen.

Die Vorderseite des Korpus kann beliebig endbearbeitet werden, vorzugsweise bevor das Füllmittel freigelegt bzw. die mindestens eine Ausnehmung in die Rückseite des Korpus eingebracht wird. Die Endbearbeitung hängt vom gewählten Korpuswerkstoff ab und kann bspw. durch Schleifen, Polieren, Eloxieren, galvanisches Beschichten und/oder Lackieren erfolgen.

Ein Ausführungsbeispiel der vorliegenden Erfindung wird im Folgenden anhand der beigefügten Zeichnungen näher beschrieben. Es zeigen in einer schematischen, nicht maßstabsgetreuen Darstellung:
- Figur 1a: ein Ausführungsbeispiel eines Korpus für einen beleuchtbaren Körper mit einer Vertiefung im Schnitt;
- Figur 1b: der Korpus aus Figur 1a in einer Draufsicht;
- Figur 2a: der Korpus aus Figur 1a mit mittels eines Füllmasses ausgefüllter Vertiefung im Schnitt;
- Figur 2b: der Korpus aus Figur 2a in einer Draufsicht;
- Figur 3a: der Korpus aus Figur 2a nach einer Endbearbeitung der Vorderseite im Schnitt;
- Figur 3b: der Korpus aus Figur 3a in einer Draufsicht;
- Figur 4a: ein Ausführungsbeispiel eines beleuchtbaren Körpers mit dem Korpus aus Figur 3a mit einer in die Rückseite eingebrachten Ausnehmung im Schnitt;
- Figur 4b: der beleuchtbare Körper aus Figur 4a in einer Draufsicht;
- Figur 5: der beleuchtbare Körper aus Figur 4a mit in die Ausnehmung eingebrachten und durch eine Halteplatte fixierten Leuchtmitteln im Schnitt;
- Figur 6: der beleuchtbare Körper aus Figur 4a mit in die Ausnehmung eingebrachten und durch eine stabilisierende Füllung fixierten Leuchtmitteln im Schnitt

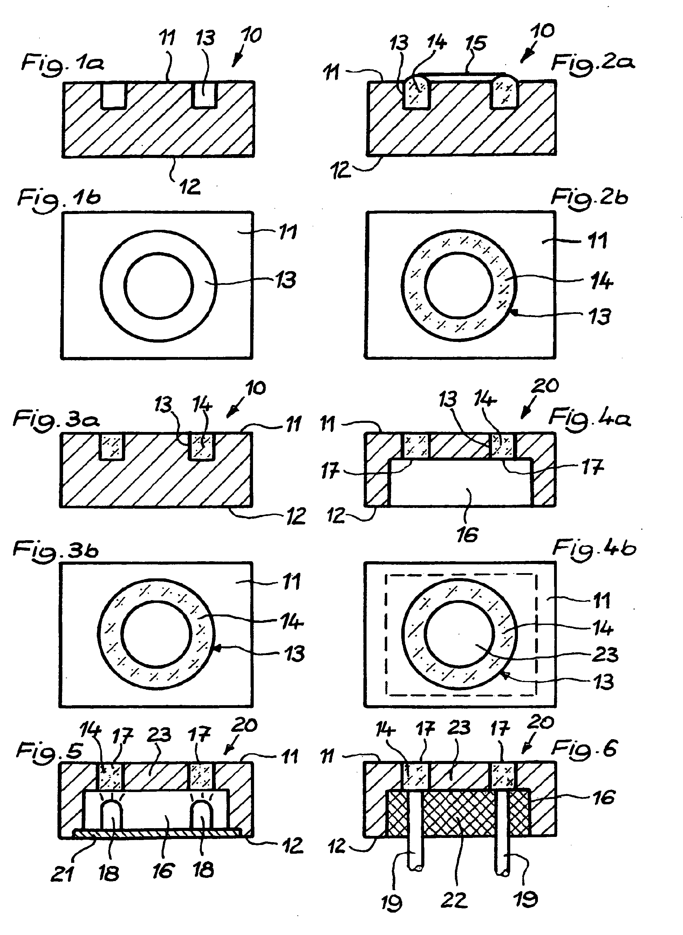

Die Figuren 1a und 1b zeigen einen Korpus 10 für eine beleuchtbaren Körper, im Ausführungsbeispiel für ein Bedienelement als Teil einer Kfz-Innenausstattung, bspw. ein Schalter, eine Drucktaste oder ein Drehknopf. Der Korpus 10 besteht im Ausführungsbeispiel aus Metall, vorzugsweise Aluminium und weist eine Vorderseite 11 und eine Rückseite 12 auf. An der Vorderseite 11 ist in den Korpus 10 eine ringförmige Vertiefung 13 eingebracht Die Vertiefung 13 steht beispielhaft für ein beliebiges Symbol, mit dem das Bedienelement versehen sein soll. Das Symbol kennzeichnet dabei die Funktion des Bedienelements. Die Vertiefung 13 kann im Ausführungsbeispiel durch ein beliebiges, dem Fachmann bekanntes Arbeitsverfahren in den Korpus 10 eingebracht werden, bspw. spanabhebende Verfahren oder Lasern.

Die Figuren 2a und 2b zeigen den nächsten Schritt des erfindungsgemäßen Verfahrens im vorliegenden Ausführungsbeispiel. Dabei wird die Vertiefung 13 mit einer geeigneten zumindest teilweise transparenten (bspw. klaren oder milchigen) Füllmasse 14 ausgefüllt Die Füllmasse 14 ist im Ausführungsbeispiel ein transparenter, thermoplastischer Kunststoff, der aufgeschmolzen in flüssigem Zustand in die Vertiefung 13 gegossen wird und anschließend aushärtet. Dabei kann sich eventuell ein wulstförmiger Überstand 15 bilden. Die Auswahl des Kunststoffes (oder anderen geeigneten Werkstoffes) und des Arbeitsverfahrens zum Ausfüllen der Vertiefung 13 stehen im Belieben des Fachmanns und hängt im Wesentlichen vom Werkstoff des Korpus 10 sowie von der gewünschten Endbearbeitung der Oberfläche des Korpus 10 ab. Die Füllmasse 14 sollte gut am Werkstoff des Korpus 10 haften und mit der Endbearbeitung der Oberfläche des Korpus 10 verträglich sein.

Die Figuren 3a und 3b stellen den Korpus 10 mit der mit der Füllmasse 14 versehenen Vertiefung 13 nach einer Endbearbeitung der Oberfläche der Vorderseite 11 dar. Wenn, wie im Ausführungsbeispiel, der Korpus 10 aus Metall, insbesondere Aluminium, besteht, kann die Oberfläche bspw. poliert und/oder galvanotechnisch beschichtet und/oder eloxiert werden. Dabei wird der unter Umständen entstandene wulstförmige Überstand 15 abgetragen, und die Füllmasse 14 schließt glatt und ebenbündig mit der Oberfläche der Vorderseite 11 des Korpus 10 ab. Die Füllmasse 14 wird durch eine galvanotechnische Beschichtung auch nicht beeinflusst, da sie selbst nicht elektrisch leitend ist.

Die Figuren 4a und 4b zeigen den fertigen beleuchtbaren Körper 20 nach dem letzten Verfahrensschritt. Dabei wird im Ausführungsbeispiel in die Rückseite 12 des Korpus 10 eine Ausnehmung 16 eingebracht Die Ausnehmung 16 wird so weit in den Korpus 10 eingebracht, bis die Füllmasse 14 freigelegt ist und die bisherige Vertiefung als von der Vorderseite 11 bis zur Ausnehmung 16 durchgehende, mit der Füllmasse 14 gefüllte Öffnung 17 anzusehen ist Dadurch entsteht auch der Eindruck "frei schwebender" Elemente 23, die bspw. beim Ausstanzen aus einer Metallplatte verloren gehen würden bzw. durch Stege gehalten werden müssten. Die Freilegung der Füllmasse 14 kann aber auch durch Abtrennung der rückseitigen Partie des Korpus 10 erfolgen.

Der Körper 20 kann nun von der Rückseite 12 des Korpus 10 her hintergrundbeleuchtet werden, wobei das Licht lediglich durch die Öffnung 17 an der Vorderseite 11 des Korpus 10 austritt Dadurch wird im Ausführungsbeispiel der Effekt eines hintergrundbeleuchteten Symbols an einem Bedienelement erzielt.

Die Hintergrundbeleuchtung kann, wie in den Figuren 5 und 6 dargestellt, durch Leuchtmittel, bspw. Dioden 18 oder Lichtleiter 19 erfolgen, welche in die Ausnehmung 16 aufgenommen sind. Die Leuchtmittel 18, 19 können bspw. auf einer die Ausnehmung 16 abdeckenden Halteplatte 21 (Figur 5) oder durch eine in die Ausnehmung 16 eingebrachte stabilisierende Füllung 22 (Figur 6) fixiert sein. Die stabilisierende Füllung 22 hat ferner die Aufgabe, den Körper 20 gegen mechanische Belastungen zu stabilisieren, bspw. gegen den auf die Vorderseite 11 einwirkenden Druck beim Bedienen eines Bedienelements. Die stabilisierende Füllung besteht vorzugsweise aus einem transparenten, thermoplastischen Kunststoff. Die Hintergrundbeleuchtung kann auch dadurch erzielt werden, dass der Körper 20 auf einer Lichtquelle oder einem leuchtenden oder beleuchteten Bauteil montiert wird (nicht dargestellt).

Das vorstehend erläuterte erfindungsgemäße Verfahren und der beleuchtbare Körper sind für zahlreiche Anwendungen geeignet, insbesondere auch zur Herstellung hintergrundbeleuchteter Dekorationselemente, bspw. für die Wohnraumausstattung.

## Patentansprüche

1. Verfahren zur Herstellung eines beleuchtbaren Körpers (20), **gekennzeichnet durch** folgende Verfahrensschritte:
a) Auswählen eines Korpus (10) mit einer Vorderseite (11) und einer Rückseite (12) oder Auswählen einer Urform für einen Korpus (10) mit einer Vorderseite (11) und einer Rückseite (12);
b) Einbringen mindestens einer Vertiefung (13) in die Vorderseite (11) des Korpus (10) oder Einbringen mindestens einer Vertiefung (13) beim Urformen des Korpus (10);
c) Ausfüllen der mindestens einen Vertiefung (13) mit einer zumindest teilweise transparenten Füllmasse (14);
d) Freilegen der zumindest teilweise transparenten Füllmasse (14) ausgehend von der Rückseite (12) des Korpus (10).

2. Verfahren nach Anspruch 1, **dadurch gekennzeichnet, dass** ein Korpus (10) aus Metall, Kunststoff, Keramik, Stein oder Holz gewählt wird.

3. Verfahren nach Anspruch 1 oder 2, **dadurch gekennzeichnet, dass** die mindestens eine Vertiefung (13) durch Schneiden, Ätzen, Bohren, Fräsen, Erodieren, Prägen, Urformen oder Lasern in den Korpus (10) eingebracht wird.

4. Verfahren nach einem der vorhergehenden Ansprüche, **dadurch gekennzeichnet, dass** die mindestens eine Vertiefung (13) durch Tauchen, Giessen oder Spritzen mit der zumindest teilweise transparenten Füllmasse (14) ausgefüllt wird.

5. Verfahren nach einem der vorhergehenden Ansprüche, **dadurch gekennzeichnet, dass** eine Füllmasse (14) verwendet wird, die Kunststoff oder Glas enthält.

6. Verfahren nach einem der vorhergehenden Ansprüche, **dadurch gekennzeichnet, dass** das Freilegen der zumindest teilweise transparenten Füllmasse (14) durch Schneiden, Fräsen, Erodieren, Schleifen, Drehen oder Lasern vorgenommen wird.

7. Verfahren nach einem der vorhergehenden Ansprüche, **dadurch gekennzeichnet, dass** der Körper (10) auf ein leuchtendes oder beleuchtetes Bauteil aufgebracht wird.

8. Verfahren nach einem der vorhergehenden Ansprüche, **dadurch gekennzeichnet, dass** das Freilegen der zumindest teilweise transparenten Füllmasse (14) durch Einbringen einer Ausnehmung (16) in die Rückseite (12) des Korpus (10) vorgenommen wird.

9. Verfahren nach Anspruch 8, **dadurch gekennzeichnet, dass** die mindestens eine Ausnehmung (16) mit mindestens einem Leuchtmittel (18, 19) versehen wird.

10. Verfahren nach einem der Ansprüche 8 oder 9, **dadurch gekennzeichnet, dass** die mindestens eine Ausnehmung (16) mit einer stabilisierenden Füllung (22) versehen wird.

11. Verfahren nach einem der vorhergehenden Ansprüche, **dadurch gekennzeichnet, dass** zwischen den Verfahrensschritten c) und d) die Vorderseite (11) des Korpus (10) endbearbeitet wird.

12. Verfahren nach Anspruch 11, **dadurch gekennzeichnet, dass** die Endbearbeitung durch Schleifen, Polieren, Eloxieren, galvanisches Beschichten und/oder Lackieren erfolgt.

## Claims

1. Method for production of an illuminable body (20), **characterized by** the steps:
a) choosing a corpus (10) with a frontside (11) and a backside (12) or choosing a prototype for a corpus (10) with a frontside (11) and a backside (12);
b) producing at least one recess (13) in the frontside (11) of the corpus (10) or producing at least one recess (13) during prototyping of the corpus (10);
c) filling the at least one recess (13) with an at least partially transparent filling material (14);
d) exposing the at least partially transparent filling material (14) from the backside (12) of the corpus (10).

2. Method according to claim 1, **characterized in that** a corpus (10) of metal, plastics, ceramics, stone or wood is chosen.

3. Method according to claim 1 or 2, **characterized in that** the at least one recess (13) is produced by cutting, etching, drilling, milling, eroding, embossing, prototyping or lasing the corpus (10).

4. Method according to one of the preceding claims, **characterized in that** the at least one recess (13) is filled with the at least partially transparent filling material (14) by submerging, pouring or spraying.

5. Method according to one of the preceding claims, **characterized in that** a filling material (14) comprising plastics or glass is used.

6. Method according to one of the preceding claims, **characterized in that** exposing the at least partially transparent filling material (14) comprises cutting, milling, eroding, grinding, turning or lasing.

7. Method according to one of the preceding claims, **characterized in that** the body (10) is applied to a luminous or lit device.

8. Method according to one of the preceding claims, **characterized in that** the at least partially transparent filling material (14) is exposed by producing a recess (16) in the backside (12) of the corpus (10).

9. Method according to claim 8, **characterized in that** the at least one recess (16) is provided with at least one illuminant (18, 19).

10. Method according to one of the claims 8 or 9, **characterized in that** the at least one recess (16) is provided with a stabilizing filling (22).

11. Method according to one of the preceding claims, **characterized in that** the frontside (11) of the corpus (10) is finished between the method steps c) and d).

12. Method according to claim 11, **characterized in that** finishing is done by grinding, polishing, anodizing, galvanic coating and/or lacquering or painting.

## Revendications

1. Procédé servant à la fabrication d'un corps pouvant être éclairé (20), **caractérisé par** les étapes de procédé qui suivent consistant à :
a) choisir un corps (10) présentant un côté avant (11) et un côté arrière (12) ou choisir une forme primaire pour un corps (10) présentant un côté avant (11) et un côté arrière (12) ;
b) pratiquer au moins un creux (13) dans le côté avant (11) du corps (10) ou pratiquer au moins un creux (13) lors du façonnage primaire du corps (10) ;
c) remplir le creux (13) au moins au nombre de un d'une matière de remplissage (14) au moins en partie transparente ;
d) dégager la matière de remplissage (14) au moins en partie transparente en partant du côté arrière (12) du corps (10).

2. Procédé selon la revendication 1, **caractérisé en ce qu'**un corps (10) est choisi parmi le métal, le plastique, la céramique, la pierre ou le bois.

3. Procédé selon la revendication 1 ou 2, **caractérisé en ce que** le creux (13) au moins au nombre de un est pratiqué dans le corps (10) par découpage, par gravure, par perçage, par fraisage, par électroérosion, par estampage, par façonnage primaire ou par irradiation laser.

4. Procédé selon l'une quelconque des revendications précédentes, **caractérisé en ce que** le creux (13) au moins au nombre de un est rempli de matière de remplissage (14) au moins en partie transparente par immersion, par coulée ou par injection.

5. Procédé selon l'une quelconque des revendications précédentes, **caractérisé en ce qu'**on utilise une matière de remplissage (14), qui contient du plastique ou du verre.

6. Procédé selon l'une quelconque des revendications précédentes, **caractérisé en ce que** le dégagement de la matière de remplissage (14) au moins en partie transparente est effectué par découpage, par fraisage, par électroérosion, par ponçage, par tournage ou par irradiation laser.

7. Procédé selon l'une quelconque des revendications précédentes, **caractérisé en ce que** le corps (10) est appliqué sur un élément à action éclairante ou éclairé.

8. Procédé selon l'une quelconque des revendications précédentes, **caractérisé en ce que** le dégagement de la matière de remplissage (14) au moins en partie transparente est effectué en pratiquant un évidement (16) dans le côté arrière (12) du corps (10).

9. Procédé selon la revendication 8, **caractérisé en ce que** l'évidement (16) au moins au nombre de un est pourvu d'au moins un moyen d'éclairage (18, 19).

10. Procédé selon l'une quelconque des revendications 8 ou 9, **caractérisé en ce que** l'évidement (16) au moins au nombre de un est pourvu d'une charge (22) à action stabilisante.

11. Procédé selon l'une quelconque des revendications précédentes, **caractérisé en ce que** le côté avant (11) du corps (10) reçoit un traitement de finition entre les étapes de procédé c) et d).

12. Procédé selon la revendication 11, **caractérisé en ce que** le traitement de finition est effectué par ponçage, par polissage, par anodisation, par enduction galvanique et/ou par application de peinture ou de laque ou de vernis.
